# EUROPEAN PATENT SPECIFICATION

(11) **EP 1 741 607 B1**
(45) Date of publication and mention of the grant of the patent: **14.11.2012**
(21) Application number: 06116889.4
(22) Date of filing: 10.07.2006
(51) Int. Cl.: B60T 8/88, B60T 17/22, B60T 13/74, B60R 16/02

(54) **Brake system with auxiliary power supply**
Bremssystem mit zusätzlicher Stromversorgung.
Système de freinage avec alimentation de puissance auxiliaire.

(30) Priority: 08.07.2005 US 697421 P; 07.07.2006 US 482414
(43) Date of publication of application: 10.01.2007
(73) Proprietor: Haldex Brake Products Aktiebolag, 261 24 Landskrona (SE)
(72) Inventor: Lindqvist, Anders, 261 38, Landskrona (SE); Nilsson, Peter, 286 92, Örkelljunga (SE)
(74) Representative: Petri, Stellan

(56) References cited:
- EP-A- 0 770 531
- EP-A- 0 897 208
- EP-A- 1 283 139
- DE-A1- 19 758 289
- DE-A1- 19 905 663
- DE-C1- 19 828 331

## Description

### CROSS-REFERENCE TO RELATED APPLICATIONS

This patent application claims the benefit of, under Title 35, United States Code, Section 119(e), U.S. Provisional Patent Application No. 60/697,421, filed July 8, 2005.

### FIELD OF THE INVENTION

The present invention relates to a system for distributing the storage of energy in a brake system. More specifically, the invention relates to a system for supplying electric power to various components of a vehicle's brake system in the event of a failure of the primary power source.

### BACKGROUND OF THE INVENTION

Electromechanical brakes have been used on vehicles of various types for many years. In general, electromechanical brake systems employ an electric motor to actuate the brakes instead of the traditional hydraulic or air brake systems. In response to a signal from an electronic control unit, the electric motor applies a force that brings the brake pad into contact with the brake disc. These electromechanical systems enjoy important advantages over traditional systems, including lower weight, easier maintenance and repair, and overall system simplicity.

However, some in the industry have cautioned that electromechanical braking systems may raise some safety concerns regarding how brake functionality can be maintained in the event that the system loses electric power. The electric motor, and thus the braking system, is dependent upon a source of electric power to generate the actuation force that brings the brake pad into contact with the brake disc. Therefore, in the event of a power loss, the brakes may fail to work. This problem has hindered widespread use of electromechanical brakes.

Another drawback of some electromechanical braking systems is the size of the actuation force required to create adequate braking force. In order for an electric motor to generate enough braking force to stop a vehicle of significant mass, it must be supplied with a high amount of energy and is relatively heavy and expensive. This problem can diminish the value of the advantages of an electromechanical system over the traditional systems.

In response, certain electromechanical brakes were invented that include a mechanism that magnifies the actuation force into increased braking force. This type of system, such as, for example, that described in U.S. Patent No. 4,852,699, incorporated herein by reference, has been labeled 'self-energizing' or 'self-energizing.' Generally, in a self-energizing brake system, the brake pad is brought into contact with the brake disc by the relatively small force of the electric actuator. Then, the frictional force created by the pad and disc creates a torque that is used to increase the force of the brake pad against the disc. This reduces the brake system's demand for energy and allows for smaller actuation components.

Self-energizing systems can also be susceptible to the safety problems associated with a loss of electric power. Depending on how the self-energizing system is designed, when power is lost, the system may either lose all braking ability or commence uncontrolled braking. A self-energizing brake system usually includes a mechanical spring unit that will provide the energy to either apply or release the brakes in case of a loss of electric power. When the spring unit is used to release the brakes, the brake pads are pulled away from the brake discs and brake activation becomes impossible. Conversely, when the spring unit is used to apply the brakes, the brake pads are forced into contact with the brake disc and uncontrolled braking will occur due to the self-energizing nature of the system. Obviously, either of these situations could be dangerous.

The operation of an electromechanical braking system is usually monitored and controlled by an electronic control unit ("ECU"). The ECU collects data through input signals from various components and systems on the vehicle and uses that information to maintain optimum brake system performance. Many important vehicle systems in addition to the braking system, such as steering and passenger safety, depend on an ECU to maintain safe functioning. In the event of a loss of power to a vehicle's ECU, important vehicle systems can become unstable or lose functionality completely.

One system that has been proposed, which addresses the safety concerns associated with electromechanical brake systems, is to employ an auxiliary or secondary power supply. This system of auxiliary power supply may involve a capacitor connected to and charged by the primary power source, such as, for example, the systems disclosed in U.S. Patent No. 6,291,951 to Baulier and International Patent Application No. WO 2005/002927 by Matsushita. In the event of a failure of the primary power source, the capacitor can supply power to the dependent systems for a limited time.

However, one problem with this type of system is that a single secondary power source is connected to multiple devices that require electric power. The dependency of multiple devices on a single secondary power source raises safety concerns similar to those of a system without any auxiliary power system. For instance, a single fault in the auxiliary power system would render the system ineffective, and thus, none of the multiple devices attached to it would have auxiliary power. Additionally, these systems employ traditional braking units, which require a significant amount of energy to operate, and thus, a large secondary power source is required in order to supply the necessary power.

Another system that has been proposed is to provide a dedicated battery or other energy source/accumulator for each of multiple brake actuators, such as in the system disclosed EP 0 897 208. However, this type of system also results in a number of disadvantages. First battery energy is stored indirectly in chemical compounds and is released due to the processes of electrochemically active materials. The chemical reactions on the electrodes therefore cause undesirable aging of the batteries. Another problem with this approach is that, while batteries/accumulators can store a lot of energy, which is not required for the limited emergency stopping applications discussed above, the high internal resistance of batteries can require long charge and discharge times.

Moreover, another, even more significant problem that exists with the system design described in EP 0 897 208 is that the dedicated batteries cannot be continually charged, as the batteries will suffer from the degrading of the chemical compounds therein. Therefore, they require more complicated circuitry, including the use of switches 28a-b. These complicated circuits can be costly and can be more prone to failure than simpler circuits. Additionally, the main power supply also cannot be continually connected to the dedicated battery/accumulator because this will produce an additive voltage effect. Once again, this requires the use of additional switching elements in order to keep the main power supply from always being connected in series with this auxiliary battery, which, as previously noted, unnecessarily increases the complexity and number of components, thereby increasing the cost and the likelihood of circuit failure.

Another prior art system is disclosed in EP 0 897 208 A, which is considered the closest prior art.

What is desired, therefore, is an auxiliary power supply system that will be able to supply sufficient auxiliary electric power to vehicle brake systems in the event of a battery and/or engine failure that results in the loss of electric power. What is further desired is a system that would allow the vehicle operator to retain control of an electromechanical braking system long enough to bring the vehicle to a safe stop. Additionally, a system is desired that is adapted for use with multiple devices that require electric power.

### SUMMARY OF THE INVENTION

Accordingly, it is an object of the present invention to provide an auxiliary power supply for electromechanical brake systems.

It is another object of the present invention to provide an auxiliary power supply that maximizes the safety of electromechanical brake systems.

It is a further object of the present invention to provide an auxiliary power supply for electromechanical brake systems that minimizes the effect of individual power failures.

It is still another object of the present invention to provide an auxiliary power supply for electromechanical brake systems that minimizes the time required to supply the emergency braking power.

It is yet another object of the present invention to provide an auxiliary power supply for electromechanical brake systems that is simple in design, easy to maintain and repair, lightweight, and small.

These and other objectives are achieved in one embodiment by the provision of a brake system having at least one power supply, at least one brake unit electrically connected to the at least one power supply such that the brake unit receives power therefrom, and at least one capacitor electrically connected to the at least one power supply such that the capacitor receives power therefrom and stores it as auxiliary power, where the at least one brake unit comprises a self-energizing brake unit; and where the at least one capacitor is electrically connected to the self-energizing brake unit for supplying auxiliary power thereto.

In another embodiment, the invention comprises a brake system including at least one power supply, a plurality of brake units electrically connected to the at least one power supply such that the brake units receive power therefrom, and a plurality of capacitors electrically connected to the at least one power supply such that the capacitors receive power therefrom and store it as auxiliary power, wherein the capacitors are electrically connected to the plurality of brake units for supplying auxiliary power thereto, and wherein each of the brake units receives auxiliary power from a different one of the capacitors than at least one other of the brake units.

In yet another embodiment, the invention comprises a brake system including at least one power supply, a first brake unit electrically connected to the at least one power supply, a first capacitor electrically connected to the at least one power supply for receiving power therefrom and electrically connected to the first brake unit for supplying auxiliary power thereto, a second brake unit electrically connected to the at least one power supply, a second capacitor electrically connected to the at least one power supply for receiving power therefrom and electrically connected to the second brake unit for supplying auxiliary power thereto.

In yet another embodiment, the invention comprises at least one power supply, a plurality of electronic control units electrically connected to the at least one power supply, a plurality of brake units electrically connected to the plurality of electronic control units, and a plurality of capacitors electrically connected to the at least one power supply such that the capacitors receive power therefrom and store it as auxiliary power, wherein the capacitors are electrically connected to the plurality of electronic control units for supplying auxiliary power thereto, and wherein each of the electronic control units receives auxiliary power from a different one of the capacitors than at least one other of the electronic control units.

In some of these embodiments, each of the brake units or electronic control units is connected to at least one capacitor that is not connected to any other of the brake units or electronic control units. In certain embodiments, the capacitors continuously receive power directly from the at least one power supply.

In certain embodiments, the connections between the capacitors and the brake units or electronic control units are parallel connections. In some embodiments, a diode is electrically connected between the at least one power supply and each of the capacitors.

The invention and its particular advantages and features will become more apparent from the following detailed description considered with reference to the accompanying drawings.

### BRIEF DESCRIPTION OF THE DRAWINGS

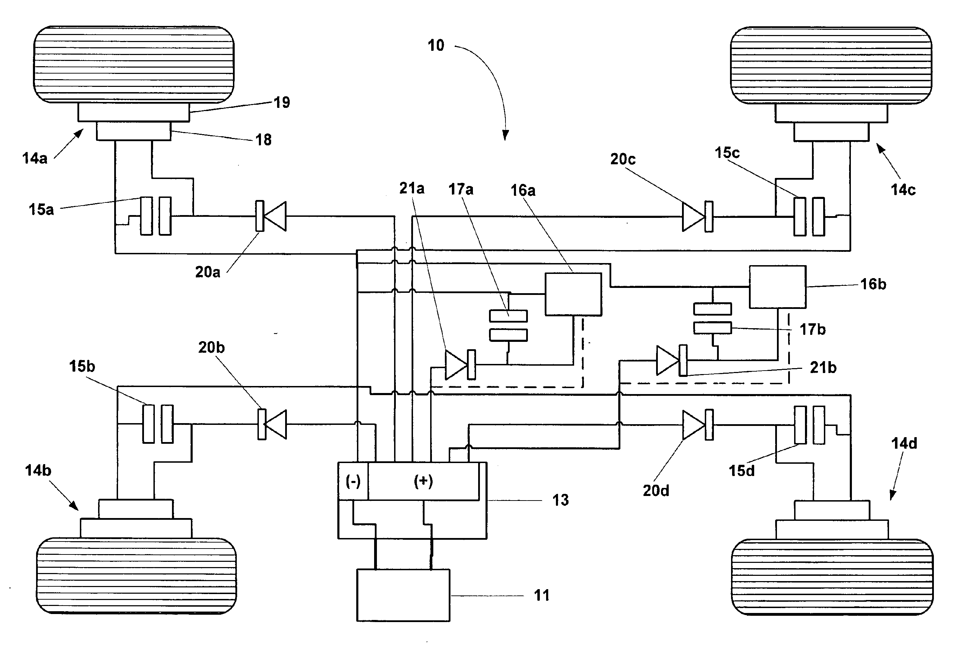

FIG. 1 is a schematic view of a brake system, electronic control system, and auxiliary power system in accordance with the invention.

### DETAILED DESCRIPTION OF THE INVENTION

Referring to Figure 1, an electromechanical brake system with an auxiliary power system in accordance with the present invention is shown. Brake system 10 includes at least one primary power supply 11, such as a battery, a plurality of brake units 14a-d, a plurality of capacitors 15a-d, and other components as described herein.

A current limiting device 13 is electrically connected to the primary power supply 11. In the embodiment illustrated in Figure 1, four brake units 14a-d are each individually connected to current limiting device 13 to receive electric power therefrom. It should be understood, however, that the present invention can be used with more or fewer brake units.

Each brake unit 14 includes mechanical brake components 19 and electric motor actuation components 18. The electric motor actuation components 18 use electric power received from power supply 11 to activate the mechanical brake components 19 in order to commence braking of the vehicle. In some advantageous embodiments, the brake units 14a-d comprise self-energizing electromechanical brake units.

Electrically connected in parallel to each brake unit 14 is at least one capacitor 15. Each capacitor 15a-d is charged by the primary power supply 11 during normal operation. In the event of a failure of the primary power supply 11, the capacitors 15a-d (or group of capacitors) will provide electric power to the electromechanical brake units 14a-d. The capacitors 15a-d are arranged such that each brake unit 14a-d can receive power from a dedicated capacitor (or group of capacitors) in the event of a failure of the vehicle's primary power supply 11. Additionally, a person skilled in the art will recognize that the number of capacitors 15 in each dedicated group can vary according to the particular power needs of the brake system.

In certain advantageous embodiments, the capacitors are double layer capacitors (i.e., DLC. Supercaps, or Ultracaps). Because the energy stored by the capacitors 15 is stored as a positive or negative charge directly on the plates without any reaction on the electrode surfaces, charging and discharging does not produce any deleterious aging effects. Moreover, due to the small internal resistance, they achieve a much higher power density than that which is achievable by batteries, as they are able to discharge energy very quickly. This is particularly useful for emergency situations entailing a failure requiring an emergency supply of power, as speed (rather than quantity) of auxiliary power is required in order to enable one to quickly bring the vehicle to a stop.

In order to limit the direction of the flow of electric charge, diodes 20a-d are electrically connected upstream of each capacitor 15a-d and the electric motor actuation components 18. Thus, if and when the primary power supply 11 fails, the diodes 20a-d will prevent current from flowing away from the brake units 14a-d. Alternatively, other devices performing a similar function, such as, for example, a MOSFET, maybe employed.

In the embodiment illustrated in Figure 1, two brake system electronic control units 16a and 16b are provided. The electronic control units 16a-b are electrically connected to the current limiting device 13 and, therefore, the vehicle's primary power supply 11. The electronic control units 16a-b receive electric power primarily from power supply 11.

Electrically connected in parallel with electronic control units 16a-b is a plurality of capacitors 17a-b. Capacitors 17a-b are arranged such that each electronic control unit 16a-b can receive power from a dedicated capacitor (or group of capacitors) in the event of a failure of the vehicle's primary power supply 11. A person skilled in the art will recognize that the number of capacitors in each dedicated group can vary according to the particular power needs of the electronic control unit.

In order to limit the direction of the flow of electric charge, the diodes (or similar devices) 21 a-b are electrically connected upstream of the capacitors 17a-b and the electronic control units 16a-b. Thus, when the primary power supply 11 fails, the diodes 21 a-b will prevent current from flowing away from electronic control units 16a-b.

The electronic control units 16a-b are connected such that they can monitor the status of the primary power supply 11 (illustrated by the dashed lines in Figure 1). Additionally, the input current from the alternator can similarly be monitored. In this way, supplemental information regarding the state of the primary power available to the system can be provided in order to allow the system to make decisions and take appropriate actions.

Although the invention has been described with reference to a particular arrangement of parts, features and the like, these are not intended to exhaust all possible arrangements or features, and indeed many other modifications and variations will be ascertainable to those of skill in the art. Accordingly, reference should be made primarily to the accompanying claims, rather than the foregoing specification, to determine the scope of the invention.

## Claims

1. A brake system (10), comprising:
at least one power supply (11);
a plurality of brake units (14a-d) electrically connected to said at least one power supply (11) such that said brake units (14a-d) receive power therefrom;
a plurality of brake unit capacitors (15a-d) electrically connected to said at least one power supply (11) such that said brake unit capacitors (15a-d) receive power therefrom and store it as auxiliary power;
at least one electronic control unit (16a-b) electrically connected to said at least one power supply (11); and
at least one electronic control unit capacitor (17a-b) electrically connected to said at least one power supply (11) such that said at least one electronic control unit capacitor (17a-b) receives power therefrom and stores it as auxiliary power;
wherein said at least one power supply (11) comprises at least one battery;
wherein said brake unit capacitors (15a-d) are electrically connected to said plurality of brake units (14a-d) for supplying auxiliary power thereto;
wherein said brake unit capacitors (15a-d) comprise at least one double layer capacitor;
wherein said brake units (14a-d) comprise at least one self-energizing brake unit;
wherein said at least one electronic control unit capacitor (17a-b) is electrically connected to said at least one electronic control unit (16a-b) for supplying auxiliary power thereto; and
wherein each of said brake units (14a-d) receives auxiliary power from a different one of said brake unit capacitors (15a-d) than at least one other of said brake units (14a-d) and than said at least one electric control unit (16a-b).

2. The brake system of claim 1, wherein each of said brake units (14a-d) is connected to at least one brake unit capacitor (15a-d) that is not connected to any other of said brake units (14a-d)

3. The brake system of claim 1, wherein at least one diode (20a-d) is electrically connected between said at least one power supply (11) and each of said brake unit capacitors (15a-d).

4. The brake system of claim 1, wherein said brake unit capacitors (15a-d) continuously receive power directly from said at least one power supply (11).

5. The brake system of claim 4, wherein each of said brake units (14a-d) is connected to at least one brake unit capacitor (15a-d) that is not connected to any other of said brake units (14a-d).

6. The brake system of claim 4, wherein at least one diode (20a-d) is electrically connected between said at least one power supply (11) and each of said brake unit capacitors (15a-d).

7. A brake system (10), comprising:
at least one power supply (11);
a plurality of electronic control units (16a-b) electrically connected to said at least one power supply (11);
a plurality of brake units (14a-d) electrically connected to said plurality of electronic control units (16a-b) and said at least one power supply (11);
a plurality of electronic control unit capacitors (17a-d) electrically connected to said at least one power supply (11) such that said electronic control unit capacitors (17a-d) receive power therefrom and store it as auxiliary power; and
a plurality of brake unit capacitors (15a-d) electrically connected to said at least one power supply (11) such that said brake unit capacitors (15a-d) receive power therefrom and store it as auxiliary power;
wherein said brake unit capacitors (15a-d) are electrically connected to said brake units (14a-d) for supplying auxiliary power thereto;
wherein said electronic control unit capacitors (17a-d) are electrically connected to said electronic control units (16a-b) for supplying auxiliary power thereto;
wherein said electronic control unit capacitors (17a-d) comprise at least one double layer capacitor;
wherein each of said electronic control units (16a-b) receives auxiliary power from a different one of said electronic control unit capacitors (17a-d) than at least one other of said electronic control units (16a-b) and than said brake units (14a-d);
wherein said at lease one power supply (11) comprises at least one battery; and
wherein said brake units (14a-d) comprise at least one self-energizing brake unit.

8. The brake system of claim 7, wherein each of said electronic control units (16a-b) is connected to at least one electronic control unit capacitor (17a-d) that is not connected to any other of said electronic control units (16a-b).

9. The brake system of claim 7, wherein said electronic control unit capacitors (17a-d) continuously receive power directly from said at least one power supply (11).

10. The brake system of claim 7, wherein at least one diode (20a-d) is electrically connected between said at least one power supply (11) and each of said electronic control unit capacitors (17a-d).

## Patentansprüche

1. Ein Bremssystem (10) aufweisend:
zumindest eine Stromversorgung (11);
eine Vielzahl von Bremseinheiten (14a-d), die elektrisch mit der zumindest einen Stromversorgung (11) derart verbunden sind, dass die Bremseinheiten (14a-d) von dieser Strom erhalten;
eine Vielzahl von Bremseinheit-Kondensatoren (15a-d), die mit der zumindest einen Stromversorgung (11) elektrisch derart verbunden sind, dass die Bremseinheit-Kondensatoren (15a-d) von dieser Strom erhalten und diesen als Hilfsstrom speichern;
zumindest eine elektronische Steuereinheit (16a-b), die elektrisch mit der zumindest einen Stromversorgung (11) verbunden ist;
und zumindest einen Kondensator (17a-b) der elektronischen Steuereinheit, der elektrisch mit der zumindest einen Stromversorgung (11) derart verbunden ist, dass der zumindest eine Kondensator (17a-b) der elektronischen Steuereinheit von dieser Strom erhält und diesen als Hilfsstrom speichert;
wobei die zumindest eine Stromversorgung (11) zumindest eine Batterie aufweist;
wobei die Bremseinheit-Kondensatoren (15a-d) elektrisch mit der Vielzahl von Bremseinheiten (14a-d) verbunden sind, um diese mit Hilfsstrom zu versorgen;
wobei die Bremseinheit-Kondensatoren (15a-d) zumindest einen Doppelschicht-Kondensator aufweisen;
wobei die Bremseinheiten (14a-d) zumindest eine selbstverstärkende Bremseinheit aufweisen;
wobei der zumindest eine Kondensator (17a-b) der elektronischen Steuereinheit elektrisch mit der zumindest einen elektronischen Steuereinheit (16a-b) verbunden ist, um diese mit Hilfsstrom zu versorgen; und
wobei jede der Bremseinheiten (14a-d) Hilfsstrom von einem anderen der Bremseinheit-Kondensatoren (15a-d) als zumindest eine andere der Bremseinheiten (14a-d) und als zumindest eine andere elektronische Steuereinheit (16a-b) erhält.

2. Bremssystem nach Anspruch 1, bei welchem jede der Bremseinheiten (14a-d) mit zumindest einem der Bremseinheit-Kondensatoren (15a-d) verbunden ist, der nicht mit irgendeiner anderen der Bremseinheiten (14a-d) verbunden ist.

3. Bremssystem nach Anspruch 1, bei welchem zumindest eine Diode (20a-d) zwischen zumindest einer Stromversorgung (11) und jedem der Bremseinheit-Kondensatoren (15a-d) elektrisch verbunden ist.

4. Bremssystem nach Anspruch 1, bei welchem die Bremseinheit-Kondensatoren (15a-d) direkt von zumindest einer Stromversorgung (11) kontinuierlich mit Strom versorgt werden.

5. Bremssystem nach Anspruch 4, bei welchem jede der Bremseinheiten (14a-d) mit zumindest einem Bremseinheit-Kondensator (15a-d) verbunden ist, der nicht mit irgendeiner anderen der Bremseinheiten (14a-d) verbunden ist.

6. Bremssystem nach Anspruch 4, bei welchem zumindest eine Diode (20a-d) zwischen zumindest einer Stromversorgung (11) und jedem der Bremseinheit-Kondensatoren (15a-d) elektrisch verbunden ist.

7. Bremssystem (10), aufweisend:
zumindest eine Stromversorgung (11);
eine Vielzahl von elektronischen Steuereinheiten (16a-b), die elektrisch mit der zumindest einen Stromversorgung (11) verbunden sind;
eine Vielzahl von Bremseinheiten (14a-d), die elektrisch mit der Vielzahl von elektronischen Steuereinheiten (16a-b) und der zumindest einen Stromversorgung (11) verbunden sind;
eine Vielzahl von Kondensatoren (17a-d) der elektronischen Steuereinheit, die elektrisch mit der zumindest einen Stromversorgung (11) derart verbunden sind, dass die Kondensatoren (17a-d) der elektronischen Steuereinheit von dieser Strom erhalten und diesen als Hilfsstrom speichern; und
eine Vielzahl von Bremseinheit-Kondensatoren (15a-d), die elektrisch mit der zumindest einen Stromversorgung (11) derart verbunden sind, dass die Bremseinheit-Kondensatoren (15a-d) von dieser Strom erhalten und diesen als Hilfsstrom speichern;
wobei die Bremseinheit-Kondensatoren (15a-d) elektrisch mit den Bremseinheiten (14a-d) verbunden sind, um diese mit Hilfsstrom zu versorgen;
wobei die Kondensatoren (17a-d) der elektronischen Steuereinheit elektrisch mit den elektronischen Steuereinheiten (16a-b) verbunden sind, um diese mit Hilfsstrom zu versorgen;
wobei die Kondensatoren (17a-d) der elektronischen Steuereinheit zumindest einen Doppelschicht-Kondensator aufweisen;
wobei jede der elektronischen Steuereinheiten (16a-b) Hilfsstrom von einem anderen Kondensator (17a-d) der elektronischen Steuereinheit als zumindest eine andere der elektronischen Steuereinheiten (16a-b) und als die Bremseinheiten (14a-d) erhält;
wobei zumindest eine Stromversorgung (11) zumindest eine Batterie aufweist; und
wobei die Bremseinheiten (14a-d) zumindest eine selbstverstärkende Bremseinheit aufweisen.

8. Bremssystem nach Anspruch 7, bei welchem jede der elektronischen Steuereinheiten (16a-b) mit zumindest einem Kondensator (17a-d) der elektronischen Steuereinheit verbunden ist, der nicht mit irgendeiner anderen der elektronischen Steuereinheiten (16a-b) verbunden ist.

9. Bremssystem nach Anspruch 7, bei welchem die Kondensatoren (17a-d) der elektronischen Steuereinheit direkt von der zumindest einen Stromversorgung (11) kontinuierlich mit Strom versorgt werden.

10. Bremssystem nach Anspruch 7, bei welchem zumindest eine Diode (20a-d) zwischen der zumindest einen Stromversorgung (11) und jedem der Kondensatoren (17a-d) der elektronischen Steuereinheit elektrisch verbunden ist.

## Revendications

1. Système de freinage (10) comprenant :
au moins une alimentation électrique (11) ;
une pluralité d'unités de freinage (14a-d) connectées électriquement à ladite au moins une alimentation électrique (11) de sorte que lesdites unités de freinage (14a-d) reçoivent de l'énergie de celle-ci ;
une pluralité de condensateurs d'unité de freinage (15a-d) connectés électriquement à ladite au moins une alimentation électrique (11) de sorte que lesdits condensateurs d'unité de freinage (15a-d) reçoivent de l'énergie de celle-ci et la stockent comme énergie auxiliaire ;
au moins une unité de commande électronique (16a-b) connectée électriquement à ladite au moins une alimentation électrique (11) ; et
au moins un condensateur d'unité de commande électronique (17a-b) connecté électriquement à ladite au moins une alimentation électrique (11) de sorte que ledit au moins un condensateur d'unité de commande électronique (17a-b) reçoive de l'énergie de celle-ci et la stocke comme énergie auxiliaire ;
dans lequel ladite au moins une alimentation électrique (11) comprend au moins une batterie ;
dans lequel lesdits condensateurs d'unité de freinage (15a-d) sont connectés électriquement à ladite pluralité d'unités de freinage (14a-d) pour délivrer de l'énergie auxiliaire à celles-ci ;
dans lequel lesdits condensateurs d'unité de freinage (15a-d) comprennent au moins un condensateur à double couche ;
dans lequel lesdites unités de freinage (14a-d) comprennent au moins une unité de freinage à auto-serrage ;
dans lequel ledit au moins un condensateur d'unité de commande électronique (17a-b) est connecté électriquement à ladite au moins une unité de commande électronique (16a-b) pour délivrer de l'énergie auxiliaire à celle-ci ; et
dans lequel chacune desdites unités de freinage (14a-d) reçoit de l'énergie auxiliaire provenant d'un desdits condensateurs d'unité de freinage (15a-d) différent d'au moins une autre desdites unités de freinage (14a-d) et de ladite au moins une unité de commande électronique (16a-b).

2. Système de freinage selon la revendication 1, dans lequel chacune desdites unités de freinage (14a-d) est connectée à au moins un condensateur d'unité de freinage (15a-d) qui n'est pas connecté à une quelconque autre desdites unités de freinage (14a-d).

3. Système de freinage selon la revendication 1, dans lequel au moins une diode (20a-d) est connectée électriquement entre ladite au moins une alimentation électrique (11) et chacun desdits condensateurs d'unité de freinage (15a-d).

4. Système de freinage selon la revendication 1, dans lequel lesdits condensateurs d'unité de freinage (15a-d) reçoivent continuellement de l'énergie directement à partir de ladite au moins une alimentation électrique (11).

5. Système de freinage selon la revendication 4, dans lequel chacune desdites unités de freinage (14a-d) est connectée à au moins un condensateur d'unité de freinage (15a-d) qui n'est pas connecté à une quelconque autre desdites unités de freinage (14a-d).

6. Système de freinage selon la revendication 4, dans lequel au moins une diode (20a-d) est connectée électriquement entre ladite au moins une alimentation électrique (11) et chacun desdits condensateurs d'unité de freinage (15a-d).

7. Système de freinage (10) comprenant :
au moins une alimentation électrique (11) ;
une pluralité d'unités de commande électroniques (16a-b) connectées électriquement à ladite au moins une alimentation électrique (11) ;
une pluralité d'unités de freinage (14a-d) connectées électriquement à ladite pluralité d'unités de commande électroniques (16a-b) et à ladite au moins une alimentation électrique (11) ;
une pluralité de condensateurs d'unité de commande électronique (17a-d) connectés électriquement à ladite au moins une alimentation électrique (11) de sorte que lesdits condensateurs d'unité de commande électronique (17a-d) reçoivent de l'énergie de celle-ci et la stockent comme énergie auxiliaire ; et
une pluralité de condensateurs d'unité de freinage (15a-d) connectés électriquement à ladite au moins une alimentation électrique (11) de sorte que lesdits condensateurs d'unité de freinage (15a-d) reçoivent de l'énergie de celle-ci et la stockent comme énergie auxiliaire ;
dans lequel lesdits condensateurs d'unité de freinage (15a-d) sont connectés électriquement auxdites unités de freinage (14a-d) pour délivrer de l'énergie auxiliaire à celles-ci ;
dans lequel lesdits condensateurs d'unité de commande électronique (17a-d) sont connectés électriquement auxdites unités de commande électronique (16a-b) pour délivrer de l'énergie auxiliaire à celles-ci ;
dans lequel lesdits condensateurs d'unité de commande électronique (17a-d) comprennent au moins un condensateur à double couche ;
dans lequel chacune desdites unités de commande électronique (16a-b) reçoit de l'énergie auxiliaire provenant d'un desdits condensateurs d'unité de commande électronique (17a-d) différent d'au moins une autre desdites unités de commande électroniques (16a-b) et desdites unités de freinage (14a-d) ;
dans lequel ladite au moins une alimentation électrique (11) comprend au moins une batterie ; et
dans lequel lesdites unités de freinage (14a-d) comprennent au moins une unité de freinage auto-alimentée.

8. Système de freinage selon la revendication 7, dans lequel chacune desdites unités de commande électroniques (16a-b) est connectée à au moins un condensateur d'unité de commande électronique (17a-d) qui n'est pas connecté à une quelconque autre desdites unités de commande électroniques (16a-b).

9. Système de freinage selon la revendication 7, dans lequel lesdits condensateurs d'unité de commande électronique (17a-d) reçoivent continuellement de l'énergie directement à partir de ladite au moins une alimentation électrique (11).

10. Système de freinage selon la revendication 7, dans lequel au moins une diode (20a-d) est connectée électriquement entre ladite au moins une alimentation électrique (11) et chacun desdits condensateurs d'unité de commande électronique (17a-d).
